# EUROPEAN PATENT APPLICATION

(11) **EP 3 301 126 A1**
(43) Date of publication of application: **04.04.2018**
(21) Application number: 16191717.4
(22) Date of filing: 30.09.2016
(51) Int. Cl.: C08J 5/18, C08G 67/02, F16L 9/12, F16L 11/08

(54) **EXTRUDED THERMOPLASTIC TAPE COMPRISING OR CONSISTING OF ALIPHATIC POLYKETONE**

(71) Applicant: A. Schulman GmbH, 50170 Kerpen (DE)
(72) Inventor: Dowe, Andreas, 46539 Dinslaken (DE)
(74) Representative: dompatent von Kreisler Selting Werner - Partnerschaft von Patent- und Rechtsanwälten mbB

(57) **Abstract**

An extruded thermoplastic tape comprising or consisting of aliphatic polyketone, unbonded flexible pipes comprising such tape, anti-wear tapes as well as uses of the unbonded flexible pipes and extruded thermoplastic tapes.

## Description

Any of the documents mentioned in the description are incorporated by reference in their entirety.

The present invention relates to extruded thermoplastic tapes comprising or consisting of aliphatic polyketone, unbonded flexible pipes consisting of multiple layers, anti-wear tapes and uses thereof.

### Prior art:

Unbonded flexible pipes consisting of multiple layers are known. Unbonded flexible pipes are in common use in the oil and gas industry and are usually fabricated from layers of extruded thermoplastics, wound thermoplastic tapes and metals. Unbonded flexible pipes are for example disclosed in US 6,085,799, EP 1 678 437, US 6,123,114, EP 0 817 935 and WO 01/61232.

Further, WO 99/67560 describes an unbonded flexible pipe with an interior extruded lining composed of an aliphatic polyketone.

Generally an unbonded flexible pipe consists of several layers like an interior thermoplastic lining, as a barrier to the escape of the conveyed fluid, and one or more reinforcement layers on the external side of the internal lining. Conventional unbonded flexible pipes can comprise additional layers, for example one or more reinforcement layers on the internal side of the interior lining, in order to prevent collapse of the interior lining under high external pressure. Typically the latter type of interior reinforcement is termed a "carcass". Additionally, an exterior sheath may moreover be present, in order to provide a barrier to ingress of liquid from the exterior environment into the reinforcement layers or other inner polymeric or metallic functional layers. Further, in many instances a tape is helically wound between the reinforcement layers in order to prevent abraision on the metal structure due to friction. Such tapes are usually termed anti-wear tapes.

The term unbonded means that at least two of the layers, inclusive of reinforcement layers and plastic layers, have been designed without bonding to one another. In practice, such pipes comprise at least two reinforcement layers which over the length of the pipe have no bonding to one another, either directly or indirectly, i.e. by way of other layers. The pipe can therefore be bent and is flexible enough to be rolled up for transport purposes.

Unbonded flexible pipes of this type may be used in various embodiments in offshore applications and in various onshore applications e.g. for the transport of liquids, gases and slurries. For example, they can be used for the transport of fluids where very high or very different water pressure prevails over the length of the pipe, for instance taking the form of risers which run from the ocean floor up to equipment at or in the vicinity of the ocean surface. They can also be used as pipes for the transport of liquids of gases between various items of equipment, or as pipes laid at great depth on the ocean floor, or as pipes between items of equipment close to the ocean surface.

In conventional unbonded flexible pipes the reinforcement layers are usually composed of helically arranged steel wires, steel profiles, or steel tapes, in which the individual layers have been formed with various winding angles relative to the axis of the pipe.

Further, in conventional unbonded flexible pipes, the anti-wear tapes are usually composed of a polyamide, such as PA11, PA12, or PA612, of polyvinylidene fluoride (PVDF), of polyetheretherketone (PEEK), of polyolefines and of polyphenylsulfone (PPSU).

Current offshore and subsea operations do face more and more challenges as a result of increasing operation temperatures and operation pressures. With increasing internal pressures of the unbonded flexible pipes the resulting interstitial pressure between the layers of the unbonded flexible pipe increases. As a result the anti-wear tapes placed between steel reinforcement layers of conventional pipes do face higher compression loads requiring a sufficient strength of the tape material to avoid creep into gaps of the surounding reinforcment layers which would cause the risk of damaging the tape and therefore its function. With increasing interstitial pressures wear between the layers is increased as well. The above-mentioned gaps could be for example the result of the arrangement of the steel reinforcement layers. Additionally, increasing operation temperatures in parallel to increased operation pressure further puts standard anti-wear tape materials like PA11 and PVDF at their functional limits.

EP 1 678 437 describes some limitations of existing anti-wear tape solutions based on PA11 and PVDF and introduces a PTFE based tape solution in order to overcome drawbacks of the prior art.

GB 2 441 066 and WO 2012/095214 try to overcome disadvantages of conventional anti-wear tapes by introducing an anti-wear tape based on PPSU for high temperature, high pressure applications.

However, such anti-wear tape solutions have considerable disadvantages, one of which is the hight cost. Due to the high cost they are only used if standard solutions based on PA and PVDF are not applicable.

Therefore, the manufacturers of unbonded flexible pipes have to work with several different tapes resulting in additional logistical and inventory efforts.

### Object of the invention:

It was therefore an object of the present invention to overcome the drawbacks of the prior art and provide a tape that is suitable for the ever increasing demands of unbondable flexible pipes as well as to provide a material that is suitable for the production and preparation of such tapes. The materials and tapes according to the present invention should be able to be used over a broad range of operation conditions while at the same time only have moderate cost and allow to reduce the number of required tape materials in unbonded flexible pipes significantly. A further object of this invention was to provide improved unbonded flexible pipes, preferably for subsea or deep-sea applications, particularly for transporting hydrocarbons in which the anti-wear layer shows improved properties over the prior art. An additional object of the present invention was to provide several uses for the tapes, layers and pipes according to the present invention.

### Solution:

The object of the present invention has been solved by an extruded thermoplastic tape comprising or consisting of an aliphatic polyketone.

Additionally, the object of the present invention has been solved by an unbonded flexible pipe in which the extruded thermoplastic tape of the present invention is used as an anti-wear layer.

Further, several uses for the thermoplastic tape, the aliphatic polyketone and the unbonded flexible pipe according to the present invention have been found, thus solving that aspect of the present invention's object.

### Definition of terms:

Temperature values are, if not specified otherwise, in degrees celcius (°C).

If not specified otherwise, the processes and reactions or process steps are conducted at normal pressure/atmospheric pressure that means at about 1013 mbar.

In the context of the present invention the formulation "and/or" includes any one as well as all combinations of the elements given in the respective list.

In the context of the present invention the formulation "embodiment of the present invention" is intechangeably used with the formulation "variation of the present invention".

In the context of the present invention the formulation "comprise or consist of", as well as its various grammatical forms, means that the respective preceedeing matter comprises the following matter and that it is preferred that the preceeding matter is composed of the following matter.

### Short description of the drawings:

Figure 1 illustrates an unbonded flexible pipe according to the present invention.
Figure 2 illustrates the layer structure of an unbonded flexibe pipe according to the present invention.

### Detailed description:

In the drawings and description that follows like parts are marked throughout the specification and drawings with the same reference numerals, respectively. The drawing figures are not necessarily to scale. Certain features of the invention may be shown exaggerated in scale or in somewhat schematic form and some details of conventional elements may not be shown in the interest of clarity and conciseness.

A first embodiment of the present invention is an extruded thermoplastic tape comprising or consisting of an aliphatic polyketone.

The aliphatic polyketone has only carbon atomes in its backbone and comprises and consists of the structural units
(I) [-CH₂CHR₁(C=O)-] and
(II) [-CH₂CHR₂(C=O)-],
wherein R₁ and R₂ are independently from one another the same or different and are selected from the group consisting of hydrogen and C₁ to C₁₂-alkyl preferably being selected from the group consisting of methyl, ethyl, propyl, butyl, pentyl, hexyl or heptyl, especially preferred R₁ is hydrogen and R₂ is methyl, wherein the structural units are randomly distributed, blocked or both.

In one variation of the present invention the aliphatic polyketone is semi-crystalline.

In one embodiment of the present invention the polyketone polymer comprises at least 80% by volume, preferably at least 90 % by volume, especially preferred at least 95% by volume of the structural units (I) and (II).

In one embodiment of the present invention the aliphatic polyketone has a melting temperature of between 200°C and 250°C, preferably 210°C to 240°C. In one embodiment of the present invention the aliphatic polyketone has a molecular weight of at least 40000 g/mol, preferably of at least 60000 g/mol.

In one additional embodiment of the present invention the polyketone has a molecular weight of at least 200000 g/mol.

In one embodiment of the present invention the polyketone has a weight-average molecular weight of from 140000 g/mol to 410000 g/mol, even more preferably a weight-average molecular weight of from 150000 g/mol to 210000 g/mol or from 290000 g/mol to 400000 g/mol and especially preferably a weight-average molecular weight of from 160000 g/mol to 200000 g/mol or from 300000 g/mol to 390000 g/mol.

Examples for commercially available polyketones in this context are available under the designation Hyosung Polyketon M330A, M340A, M630A and M640A all produced by Hyosung.

In the context of the present invention it has surprisingly been found that an extruded thermoplastic tape comprising or consisting of the above-described aliphatic polyketone has a variety of beneficial features that make it especially well suitable for use as anti-wear layers in unbonded flexible pipes.

The extruded thermoplastic tapes of the present invention, as well as the anti-wear tapes and anti-wear layers of the present invention comprising or consisting of the extruded thermoplastic tape according to the present invention have increased lifetimes in comparison with those anti-wear layers of the prior art. It has been found that the tapes of the present invention show improved mechanical reserves at increased temperatures compared to standard anti-wear tapes. Therefore, the application window of the tapes according to the present invention has been considerably broadened when compared to tapes of the prior art. Further, the tapes according to the present invention show very good abrasion resistances compared to commonly used tapes made from polyamides or polyvinylidene fluorides. Also, the heat deflection temperature of the tapes according to the present invention is significantly higher than the heat deflection temperature of commonly used anti-wear tapes.

In one embodiment of the present invention, the extruded thermoplastic tapes according to the present invention can be produced by known extrusion technologies.

In one embodiment of the present invention, the tapes according to the present invention are being wound and supplied on a bobbin.

In one embodiment of the present invention the extruded thermoplastic tape has a thickness of between 0.10 mm and 5.00 mm, in another embodiment of the present invention the tape has a thickness of between 0.20 mm and 3.00 mm. In one embodiment of the present invention the thermoplastic tape has a width of between 20 mm and 600 mm, while in another embodiment of the present invention the tape has a width of between 30 mm and 250 mm.

In one embodiment of the present invention, the desired width of the tape can be produced directly. In another embodiment of the present invention, it can be achieved by extruding a wider tape first and cutting it to the desired width in a second cutting step. These are techniques commonly known.

Of course, it should be understood that the above-mentioned thicknesses and widths of the extruded tapes according to the present invention are only examplary and encompass the thicknesses and widths usually employed for anti-wear tapes. It is within the context of the present invention to provide thicknesses and widths of tapes that are considerably smaller or greater than those mentioned above.

In one embodiment of the present invention the extruded thermoplastic tape is extruded in one part, the part having the desired length.

In one embodiment of the present invention the length of the extruded thermoplastic tape can be extended by welding elements of shorter length together. Suitable welding processes are well known, examples of such processes are hot plate welding and laser welding.

In one embodiment of the present invention the welding process can be applied at the manufacturing side of the tape producer, in another embodiment of the present invention the welding process can be applied at the manufacturing side of the manufacturer of the unbonded flexible pipe.

In one embodiment of the present invention the length of the extruded thermoplastic tape can be extended by sticking together elements of shorter length. This could be done e.g. by applying a suitable adhesive tape.

In one embodiment of the present invention the tape can be wound helically along the unbonded flexible pipe axis with or without overlapping areas to the previous winding.

In one embodiment of the present invention overlapping areas of the tape can be welded together as for example described in DE 10 2010 003 916. In one embodiment of the present invention, point weldings are possible as well as area weldings.

In one embodiment of the present invention it is possible to add further additives or other components to the polyketone. In one embodiment of the present invention this can be done by a compounding step prior to the extrusion; in another embodiment of the present invention this can be done by a compounding step during the extrusion.

Additives that could be added to the polyketone in an amount of up to 5% by weight, based on the polyketone, according to one embodiment of the present invention are selected from the group consisting of heat and/or UV stabilizers, pigments, lubricants, carbon black, or other typcial substances.

In one embodiment of the present invention other components that could be added to the polyketone are selected from the group consisting of other polymers, preferably PTFE, in an amount of up to 20%, prefeably up to 10% and more preferably up to 5%, based on the entire polymer amount (i.e. polyketone and the other polymer(s)), impact modifiers, fillers like aramide fibres or powders, minerals or glass spheres, and plasticizers.

In one embodiment of the present invention milled aramide fibres can be added. These provide, inter alia, for good tribological properties.

In one embodiment of the present invention in which additives and/or other components have been added to the polyketone the matrix of the compounded product remains polyketone, in other words the polyketone content is at least 60 percent by weight, preferably 70 percent by weight and more preferabyl 80 percent by weight, based on the compounded product, respectively.

In one embodiment of the present invention reinforcing fibres, particularly glas fibres, carbon fibres or aramid fibres, are added to the polyketone in an amount of from 5 to 20 % by weight of the resulting fibre/polyketone compound.

A further embodiment of the present invention is an unbonded flexible pipe, preferably for subsea or deep-sea applications, in particular for transporting hydrocarbons, comprising or consisting of the following independent successive layers:
an internal collapse resistant layer, also called carcass when made of metall,
a fluid barrier layer, also called pressure layer,
at least one hoop strength layer,
an anti-wear layer,
a tensile strength layer,
one or more further anti-wear layers,
one or more tensile strength layers, and
an external fluid barrier layer.

In one embodiment of the present invention, the hoop strength layer and/or the tensile strength layer(s) are made from metall or metall-parts.

In one embodiment of the present invention the tensile strength layers are present in an even number, that is at least two, four, six, eight, ten etc., preferably two or four.

In one preferred embodiment of the present invention between any two metallic layers (hoop and tensile strength layers) an anti-wear layer is arranged. If any (or more, all) of the metallic layers is (are) replaced with a layer of a composite material it is still an embodiment of the present invention to arrange an anti-wear layer adjacent to the composite-material layer (s).

The unbonded flexible pipe of the present invention is a pipe construction that consists of separate unbonded polymeric and helical reinforcement layers, which allows relative movement between layers.

In one embodiment of the present invention the anti-wear layers comprise or consist of an extruded thermoplastic tape according to the present invention as described above.

In one embodiment of the present invention the anti-wear layers are in the form of helical windings of an anti-wear layer tape, preferably one made of an extruded thermoplastic tape according to the present invention.

In one embodiment of the present invention the direction of the helical winding of each even-numbered anti-wear layer is counter-wise to the direction of the helical winding of each odd-numbered anti-wear layer.

In one embodiment of the present invention the internal collapse resistent layer may take the form of a carcass, that is an interlocked metallic construction that is to prevent, totally or partially, collapse of the pipe due to pipe decompression, external pressure, tensile armour pressure, and mechanical crushing loads.

In one embodiment of the present invention the internal collapse resistent layer is a carcass and comprises or consists of stainless steel, preferably stainless 316L.

In one embodiment of the present invention the fluid barrier layer comprises or consists of polyamide 11 (PA11) or PVDF. Other usable materials in an embodiment of the present invention are polyamide 12 (PA12), polyamide 6.12 (PA6.12), polyethylene (PE), crosslinked polyethylene (PEX), though others might still be used in other embodiments of the present invenmtion.

In one embodiment of the present invention the hoop strength layer comprises or consists of carbon steel. Other usable materials in an embodiment of the present invention are for example stainless steel 316L or even composite materials with or without metallic components, though others might still be used in other embodiments of the present invention.

In one embodiment of the present invention the first anti-wear layer comprises or consists of an extruded thermoplastic tape as described above.

In one embodiment of the present invention the tensile strength layer comprises or consists of carbon steel. Other usable materials in an embodiment of the present invention are for example stainless steel 316L, carbon fibres, epoxy-fibres or even composite materials with or without metallic components, though others might still be used in other embodiments of the present invention.

In one embodiment of the present invention the second and, if present, further tensile strength layer(s) comprise(s) or consist(s) of the same material as the first tensile strength layer.

The tensile strength layer(s) is/are used to sustain, totally or partially, tensile loads.

In one embodiment of the present invention, the tensile strength layers are prepared with a lay angle between 20° and 55°, and consist of helically wound metallic wires. In one embodiment of the invention, the tensile strength layers are counter-wound.

In one embodiment of the present invention the direction of the helical winding of each even-numbered tensile strength layer is counter-wise to the direction of the helical winding of each odd-numbered tensile strength layer.

In one embodiment of the present invention the external fluid barrier layer comprises or consists of HDPE, polyamide and or thermoplastic elastomers, particularly polyamide 11 and/or polyamide 12.

In one embodiment of the present invention the second and/or any further anti-wear layer comprises or consists of an extruded thermoplastic tape according to the present invention as described above.

In another embodiment of the present invention first anti-wear layer comprises or consists of an extruded thermoplastic tape according to the present invention as described above and the second anti-wear layer comprises or consists of commonly used wear layer materials like Rilsan BESNO P20 TL, a PA11 produced by Arkema or Solef 60512, a PVDF produced by Solvay Specialty Polymers.

In one embodiment of the present invention the first anti-wear layer comprise or consists of commonly used wear layer materials like Rilsan BESNO P20 TL or Solef 60512 and the second anti-wear layer comprises or consists of an extruded thermoplastic tape as described above

In one embodiment of the present invention more than one, preferably all, of the anti-wear layers comprise or consist of an extruded thermoplastic tape according to the present invention as described above.

In any case, at least one of the anti-wear layers comprises or consists of an extruded thermoplastic tape according to the present invention as described above.

A hoop strength layer takes up (and dissipates) the internal working pressure of the line.

A tensile strength layer takes up (and dissipates) occuring tensile forces.

In one embodiment of the present invention, the respective windings of the at least one hoop strength layer(s) is/are considerably smaller than the respective windings of the at least two tensile strength layers, i.e. the hoop layers are wound with smaller angles.

In one embodiment of the present invention, the hoop strength layer material is wound with as small an angle and the repective windings as close together as possible.

Accordingly, in one embodiment of the present invention the actual number of hoop strength layers and/or tensile strength layers is adapted to the actual demands of the desired use of the unbonded pipe of the present invention.

In one embodiment of the present invention a use of an aliphatic polyketone, which is preferably semi-crystalline, and in particular as described above, as an anti-wear layer in unbonded flexible pipes or as a tape for anti-wear layers, especially of unbonded flexible pipes, has been found.

In one embodiment of the present invention the unbonded flexible pipe of the present invention is used for transporting hydrocarbons, preferably for subsea or deep-sea applications.

In one embodiment of the present invention the extruded thermoplastic tape according to the present invention is used as an anti-wear tape, preferably in subsea or deep-sea pipes for applications, especially in unbonded pipes.

In one embodiment of the present invention the unbonded pipe can additionally include an insulation layer between the hoop layer and the external fluid barrier layer to increase the thermal insulation porperties. Materials suitable for this layer are polyolefins, particularly polypropylene, polyvinylchloride, polyurethanes. In one embodiment of the present invention the additional insulation layer may be made from a thermal insulation tape based on above mentioned materials filled with hollow filler reducing the thermal conductivity of the tape. For example glas hollows could be used as filler. In another embodiment of the present invention the additional insulation layer may be made from an extruded tape according to the present invention. Preferably, but not necessarily, the additional insulation layer/tape may be placed as close to the core of the unbonded pipe as possible.

In one additional embodiment of the present invention the internal collapse resistant layer may be omitted, in which case the fluid barrier layer is the innermost layer. An example for such an embodiment would be an injection line which is under constant internal pressure and thus faces no danger of collapse. In such an embodiment the remaining layer structure is that as outlined above so that the unbonded pipe in this embodiment of the present invention comprises or consists of
a fluid barrier layer,
at least one hoop strength layer,
an anti-wear layer,
a tensile strength layer,
one or more further anti-wear layers,
one or more tensile strength layers, and
an external fluid barrier layer.

In one embodiment of the present invention composite materials may be used for any or all of the internal collapse resistant layer, the hoop strength layer(s) and the tensile strength layer(s). Examples for such composite materials that may be used in addition to metallic materials or in place of metallic materials are usually, but not exlusively, thermoplastic materials in conjuntion with fibre materials. Examples for thermoplastic materials usable in this context are for instance those suitable for the fluid barrier layer. Examples for fibre materials usable in this context are glas fibres, carbon fibres and aramide fibres. One example of a usable composite is based on epoxy resin(s) and glassfibres. An advantage of replacing the metallic parts of any or all of the internal collapse resistant layer, the hoop strength layer(s) and the tensile strength layer(s) is that the composites are much lighter, resulting in a considerable reduction in weight of the resulting unbonded pipe. Less heavy pipes are not only cheaper (both during preparation and transport) and easier to manufacture and lay-out, but also the lesser top loads put much less strain on a (sea-)platform.

In one embodiment of the present invention a hoop strength layer made of composite material is covered by an extruded tape according to the present invention.

In one embodiment of the present invention an extruded thermoplastic tape according to the present invention is used as an intermediate layer, especially as an anti-wear layer, placed between two reinforcement layers of an unbonded flexible pipe, preferably a pipe for subsea or deep-sea applications, wherein the tape is directly adjacent to both reinforcement layers.

Another embodiment of the present invention is an anti-wear tape comprising or consisting of an extruded thermoplastic tape according to the present invention as described above, preferably for subsea or deep-sea pipes or applications, especially for unbonded flexible pipes.

The extruded thermoplastic tapes according to the invention effectively avoid wear in-between adjacent steel layers, are able to survive 20 to 30 years design lifetime, allow high interstiatial pressures, have good temperature resistance.

The various variations and/or embodiments of the present invention, for example but not exclusively those of the different dependent claims or those desecribed throughout the specification, can be combined in any desired way.

It should be understood the actual design of the unbonded pipes according to the invention are custom-made to deal with the actual demands and the above described embodiment also illustrated in the examples and drawings is a simplified illustration of the basic configuration.

The invention will now be described with reference to the non-limiting example and the drawings.

### Description of the drawings:

List of reference numerals:
- 1: internal collapse resistant layer,
- 2: fluid barrier layer,
- 3: hoop strength layer,
- 4: anti-wear-layer,
- 5: tensile strenght layer,
- 4': second anti-wear layer,
- 5': second tensile strength layer,
- 6: external fluid barrier.

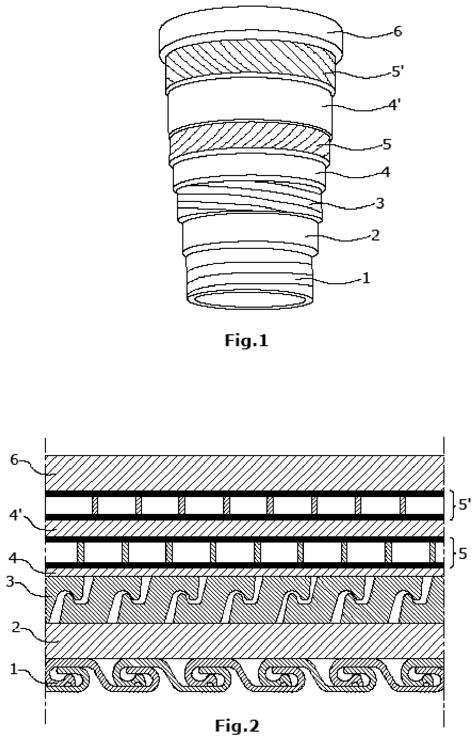

Figure 1 shows a perspective view of an unbonded flexible pipe according to the present invention, schematically showing that the respective layers are arranged coaxially around each other.

Figure 2 is a schematic illustration of the respective layers. In Figure 2 the internal collapse resistant layer is illustrated as being a carcass, that means interlocked metal parts. Further, in Figure 2 the hoop strength layer is illustrated as being made of interlocked metallic parts. Also, in Figure 2 the tensile strength layers 5 and 5' are illustrated as metallic windings

### Example 1

Test specimens were molded from Hyosung polyketone M630A and the properties were compared with common wear tape materials like Rilsan BESNO P20 TL and Solef 60512.

| **Properties** | **Standard** | **Unit** | **PK** | **PA11** | **PVDF** |
|---|---|---|---|---|---|
| Strength at yield | ISO 527 | MPa | 60 | 32 | 38 |
| Strength at yield at 80°C | ISO 527 | MPa | 45 | * | 19 |
| Strain at yield | ISO 527 | % | 20 | 25 | 8 |
| Tensile modulus | ISO 527 | MPa | 1400 | 490 | 1300 |
| Tensile modulus at 80°C | ISO 527 | MPa | 600 | 180 | 330 |
| Taber abraison resistance 1000 Cycles, 1000g, CS-17 wheel | ASTM D4060 | mg | 9 | 11 | 11 |
| Heat deflection temperature 0,4 MPa | DIN EN ISO 75 | °C | 200 | 130 | 140 |
| Heat deflection temperature 1,8 MPa | DIN EN ISO 75 | °C | 90 | 45 | 65 |

| | | | | | |
|---|---|---|---|---|---|
| *= no yielding | | | | | |

## Claims

1. An extruded thermoplastic tape comprising or consisting of an aliphatic polyketone with only carbon atoms in its backbone and comprising or consisting of the structural units
(I) [-CH₂CHR₁(C=O)-], and
(II) [-CH₂CHR₂(C=O)-],
wherein R₁ and R₂ are independently from one another the same or different and selected from the group consisting of hydrogen and C₁ to C₁₂-alkyl, the C₁ to C₁₂-akyl preferably being selected from the group consisting of methyl, ethyl, propyl, butyl, pentyl, hexyl or heptyl, especially preferred R₁ is hydrogen and R₂ is methyl, wherein the structural units are randomly distributed, blocked or both.

2. The extruded thermoplastic tape according to claim 1, wherein the polyketone polymer comprises at least 80% by volume, preferably at least 90% by volume, especially preferred at least 95% by volume, of the structural units (I) and (II).

3. The extruded thermoplastic tape according to claim 1 or 2, wherein the polyketone polymer has a melting temperature of between 200°C and 250°C, preferably 210°C to 240°C, and a molecular weight of at least 40000 g/mol, preferably of at least 60000 g/mol, more preferably a weight-average molecular weight of from 140000 g/mol to 410000 g/mol, even more preferably a weight-average molecular weight of from 150000 g/mol to 210000 g/mol or from 290000 g/mol to 400000 g/mol and especially preferably a weight-average molecular weight of from 160000 g/mol to 200000 g/mol or from 300000 g/mol to 390000 g/mol.

4. The extruded thermoplastic tape according to any one of claims 1 to 3, **characterized in that** the tape has a thickness of between 0.10 mm and 5.00 mm, preferably between 0.20 mm and 3.00 mm.

5. The extruded thermoplastic tape according to any one of claims 1 to 4, **characterized in that** the tape has a width of between 20 mm and 600 mm, preferably between 30 mm and 250 mm.

6. The extruded thermoplastic tape according to any of claims 1 to 5, **characterized in that** the tape is obtained by welding elements of shorter length together.

7. An unbonded flexible pipe, preferably for sub-sea or deep-sea applications, particularly for transporting hydrocarbons, comprising or consisting of the following independent successive layers:
an internal collapse resistant layer (1),
a fluid barrier layer (2),
at least one hoop strength layer (3),
an anti-wear layer (4), preferably in the form of helical windings,
a tensile strength layer (5),
at least one further anti-wear layer (4'), preferably in the form of helical windings,
at least one further tensile strength layer (5'), and
an external fluid barrier layer (6),
with the proviso that the second anti-wear layer and the second tensile strength layer are either both present or both absent,
**characterized in that** at least one of the anti-wear layers comprises or consists of an extruded thermoplastic tape according to any one of claims 1 to 6.

8. The unbonded flexible pipe according to claim 7, wherein the first anti-wear layer (4) is directly adjacent to the hoop strength layer (3) and the tensile strength layer (5) and the second anti-wear layer (4'), if present, is directly adjacent to the first tensile strength layer (5) and the second tensile strength layer (5'), if present.

9. Use of the unbonded flexible pipe according to claim 7 or claim 8 for transporting hydrocarbons, preferably for sub-sea or deep-sea applications.

10. Use of an extruded thermoplastic tape according to any one of claims 1 to 6 as an anti-wear tape, preferably in sub-sea or deep-sea pipes or applications.

11. Use of an extruded thermoplastic tape according to any one of claims 1 to 6 as intermediate layer, especially as an anti-wear layer, placed between two reinforcement layers of an unbonded flexible pipe, preferably a pipe for sub-sea or deep-sea applications, wherein the tape is directly adjacent to both reinforcement layers.

12. An anti-wear tape comprising or consisting of an extruded thermoplastic tape according to any one of claims 1 to 6, preferably for unbounded flexible pipes, especially for sub-sea or deep-sea pipes or applications.
